Europäisches Patentamt

European Patent Office

Office européen des brevets

(11) Numéro de publication: **0 376 772**
**A1**

(12) **DEMANDE DE BREVET EUROPEEN**

(21) Numéro de dépôt: **89403315.8**

(22) Date de dépôt: **29.11.89**

(51) Int. Cl.⁵: **F16L 27/06**

(30) Priorité: **27.12.88 FR 8817234**

(43) Date de publication de la demande:
**04.07.90 Bulletin 90/27**

(84) Etats contractants désignés:
**AT BE CH DE ES FR GB GR IT LI LU NL SE**

(71) Demandeur: **ECIA - EQUIPEMENTS ET COMPOSANTS POUR L'INDUSTRIE AUTOMOBILE**

**F-25400 Audincourt (Doubs)(FR)**

(72) Inventeur: **Roth, Robert**
**17, Faubourg de Belfort**
**F-70400 Héricourt(FR)**

(74) Mandataire: **de Morgues, Marie Emma et al**
**Cabinet Lavoix 2, place d'Estienne d'Orves**
**F-75441 Paris Cédex 09(FR)**

(54) **Raccord tubulaire articulé notamment pour tuyauterie d'échappement de véhicule autombile.**

(57) Le raccord comporte deux tubes emboîtés dont l'un, le tube externe (6), est élargi pour former un boîtier (8) de logement de deux coussins de support (10) qui sont serrés entre les deux tubes et une saillie radiale (12) du tube interne. A chacune des extrémités du boîtier (8) est montée une bague d'étanchéité (14, 15) de section en V couché qui a une aile cylindrique d'appui sur le tube interne et une aile bombée d'appui sur le tube externe. Les deux bagues sont dirigées en sens inverse et emboîtées sur les coussins qui les serrent. De préférence l'aile bombée (18) n'est sphérique que sur une partie de sa largeur. Cette partie sphérique constitue la surface de frottement contre le boîtier et permet un déplacement relatif de ces deux organes sans risque de rupture de l'étanchéité.

FIG.1

## Raccord tubulaire articulé notamment pour tuyauterie d'échappement de véhicule automobile.

La présente invention concerne le raccordement de deux tubes dont l'un subit des déplacements et/ou est soumis à des vibrations, et plus particulièrement la jonction entre une ligne d'échappement et le collecteur d'un moteur de véhicule automobile.

De tels organes sont le plus souvent reliés par un raccord comportant une bague d'étanchéité enfermée entre deux brides solidaires chacune de l'un des tubes, l'une des faces de la bague jouant le rôle de surface de glissement et ayant une forme bombée complémentaire de celle de l'une des brides. Toutefois, ces systèmes ne permettent pas d'amortir efficacement les vibrations et l'étanchéité entre les deux tubes est le plus souvent défectueuse.

On connaît également des raccords articulés comportant d'une part un organe d'étanchéité, tel qu'un soufflet ou autre, et d'autre part des moyens de support et de guidage, montés entre les deux tubes. La jonction obtenue est souple et étanche mais le raccord est complexe, relativement encombrant et souvent insuffisant pour amortir les vibrations.

La présente invention a pour but de remédier à ces inconvénients en fournissant un raccord articulé particulièrement compact qui permet d'obtenir à la fois la liberté de déplacement nécessaire, une bonne filtration des vibrations et une bonne étanchéité pendant une durée prolongée, sans risque de détérioration sous l'effet de la température.

Cette invention a en effet pour objet un raccord tubulaire articulé comportant, entre un tube interne ayant une saillie radiale et un tube externe, d'une part des moyens d'étanchéité et d'autre part des moyens de support et d'amortissement en contact avec la saillie, dans lequel le tube externe comporte une partie élargie formant boîtier dont les portions d'extrémités sont sensiblement sphériques, qui repose sur deux coussins annulaires de support et d'amortissement et qui est fermé au moins à l'une de ses extrémités par une bague d'étanchéité de section en forme de V couché, emboîtée sur le coussin correspondant et en appui sur chacun des tubes.

De préférence chaque bague d'étanchéité comporte une aile cylindrique d'appui sur le tube interne et une aile bombée de contact avec le tube externe.

Selon une variante de réalisation le raccord comporte deux bagues d'étanchéité qui ferment chacune l'une des extrémités du boîtier et sont par suite ouvertes en direction l'une de l'autre.

L'espace entre les deux tubes est ainsi fermé de manière étanche quels que soient les déplacements relatifs des deux tubes et les vibrations auxquels ils sont soumis. Le boîtier et la bague d'étanchéité sont en contact sur une surface en forme de segment de sphère qui peut être plus ou moins large mais permet dans tous les cas un déplacement relatif de ces deux organes sans que le frottement n'entraîne une usure dangereuse de l'un ou l'autre ni ne risque de provoquer un coincement.

La description ci-dessous de modes de réalisation, donnés à titre d'exemple non limitatif et représentés aux dessins annexés, fera d'ailleurs ressortir les avantages et caractéristiques de l'invention. Sur ces dessins :

La figure 1 est une vue en coupe longitudinale d'un raccord selon l'invention.

La figure 2 est une vue analogue à la Fig.1 d'une variante de réalisation.

Les figures 3, 4 et 5 sont des vues partielles, en coupe longitudinale, d'autres variantes de réalisation de l'invention.

La figure 6 est une vue schématique, à plus grande échelle, montrant la position de la bague d'étanchéité par rapport aux tubes.

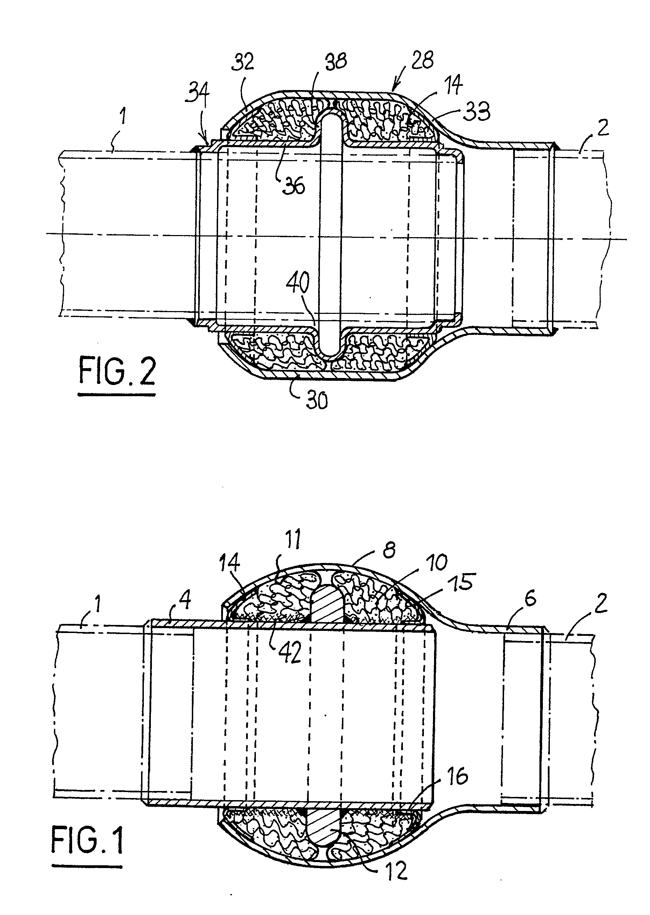

Le raccord articulé représenté est destiné à être monté entre deux tubes 1 et 2 qui sont indiqués en traits mixtes sur les Fig.1 et 2. Le tube 1 est, par exemple, un tube lié au collecteur d'échappement de véhicule automobile tandis que le tube 2 est soit un tube d'échappement traditionnel soit un tube d'échappement de type "siamois".

Ce raccord comporte un tube interne 4 de liaison au collecteur 1 et un tube externe 6 de liaison à la ligne d'échappement 2. Le tube externe 6 comporte à son extrémité libre un partie élargie 8 qui forme boîtier et délimite avec le tube 4 un logement de réception de deux coussins de support 10 entourant le tube interne 4 et en contact étroit avec les deux tubes. Ces coussins ont une forme de révolution. Ils sont composés essentiellement de fils métalliques de préférence de tricot de fils métalliques. Ils peuvent toutefois également contenir des matériaux de remplissage tels que du graphite, du mica ou autres, au voisinage de leur surface intérieure.

Dans le mode de réalisation représenté sur la Fig.1 chacun des coussins 10 a une surface externe 11 sensiblement en forme d'anneau sphérique et cette surface est appliquée contre la face interne du boîtier 8 qui a elle-même une forme sensiblement sphérique. Les deux coussins 10 sont par ailleurs séparés l'un de l'autre par un anneau 12 qui forme une saillie radiale sur la surface externe du tube interne 4, est rendu solidaire de ce tube par exemple par soudure et forme un appui pour chacun des coussins.

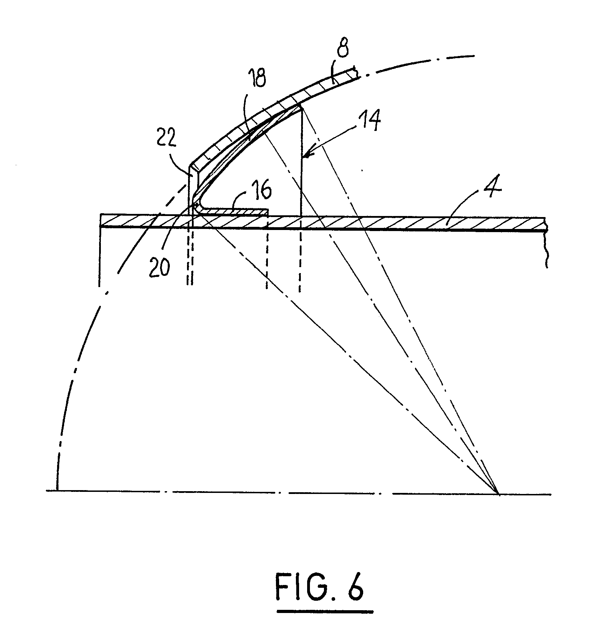

Chacune des extrémités du boîtier 8 est en outre fermée par une bague d'étanchéité 14, 15 en métal souple qui a une section en forme de V couché. La bague 14, 15 comporte en effet (Fig.6) une aile cylindrique 16 qui est en appui sur le tube interne 4, et une aile bombée, au moins partiellement en forme de anneau sphérique 18, qui est en contact avec le boîtier sphérique 8. Ces deux ailes sont reliées entre elles par un sommet arrondi 20. Les deux ailes 16 et 18 s'écartent l'une de l'autre en direction de la saillie 12 c'est-à-dire vers l'intérieur du boîtier et chaque bague d'étanchéité 14, 15 est emboîtée sur le coussin 10 correspondant.

L'aile bombée 18 de la bague d'étanchéité 14, 15 est sphérique sur une partie de sa largeur, de sorte qu'elle est en contact de frottement avec le boîtier 8 sur une surface qui correspond sensiblement à une portion de sphère. Un espace est toutefois ménagé entre eux à l'extrémité 22 du boîtier 8 c'est-à-dire à proximité du sommet arrondi 20 de la bague. Cette dernière est de préférence réalisée en une tôle d'acier ayant une faible épaisseur, par exemple inférieure à 0,4mm, afin d'être suffisamment souple pour se déformer sous la pression des coussins 10, légèrement comprimés, et d'être toujours plaquée contre le boîtier 8 et le tube 4, sans être bloquée.

La bague d'étanchéité 14, 15 assure ainsi une fermeture parfaitement étanche de l'extrémité correspondante du boîtier 8 et interdit le passage de gaz entre le tube interne 4 et ce boîtier. Elle permet en outre le déplacement relatif de ces deux organes puisque la surface de contact entre elle et le boîtier 8 est une portion de sphère ; aucun risque de coincement ni de perte de l'étanchéité n'est à craindre. En effet les coussins 10 assurent non seulement le soutien de la partie aval de la ligne d'échappement 2, et le serrage de la bague d'étanchéité 14, 15 contre le boîtier, mais également la filtration des vibrations.

Bien que dans le mode de réalisation représenté, le raccord comporte une bague d'étanchéité 14, 15 à chacune des extrémités du boîtier, il apparaîtra clairement que, lorsque le niveau d'étanchéité recherché le permet, le raccord peut n'utiliser qu'une seule bague d'étanchéité 15 qui est interposée entre les coussins 10 et les gaz chauds circulant entre les tuyaux 1 et 2 à travers le tube interne 4.

Selon une variante de réalisation, le boîtier sphérique 8 est remplacé par un boîtier 28 ayant une partie centrale cylindrique 30 entre deux anneaux sphériques 32 et 33 en appui chacun sur une bague 14, 15. Un tel boîtier présente l'avantage d'avoir un encombrement inférieur à celui du boîtier sphérique 8. En outre, lors des déplacements relatifs des deux tubes 4 et 6, il écrase et étend alternativement les coussins 10, ce qui permet d'augmenter la rigidité en flexion du raccord pour des débattements relativement importants tout en préservant sa souplesse pour les faibles débattements.

Ce boîtier 28 peut être associé de la même manière que le boîtier sphérique 8 à un tube interne 4 solidaire d'un anneau rapporté 12. Il peut également, comme représenté sur la Fig.2, être associé à un tube interne 4 ayant une portion élargie 36 dans laquelle est formée une ondulation 38 en saillie vers l'extérieur. Les coussins 10 sont alors en appui sur les côtés opposés de cette saillie. Un tel tube interne 34 est de préférence enfilé sur le tuyau 1 à raccorder et fixé sur lui à ses deux extrémités. Une cavité fermée 40 est ainsi ménagée entre le tube interne 34 et le tuyau 1. Elle crée un écran thermique entre les gaz chauds passant dans le tube et les coussins 10 qu'il convient de protéger des températures excessives. Le tuyau 1 joue le rôle de pare-feu.

La protection des coussins 10 peut d'ailleurs être accrue en disposant, sur la surface cylindrique de ces coussins, qui est en contact avec le tube interne 4, une couche de matériau compact 42 (Fig.1), par exemple en graphite ou en mica, qui rend plus difficile les échanges thermiques dans le sens gaz chauds coussins 10. On constate, par ailleurs, que cette couche 42 améliore l'étanchéité entre l'aile cylindrique 16 de la bague d'étanchéité 14, 15 et le tube interne 4.

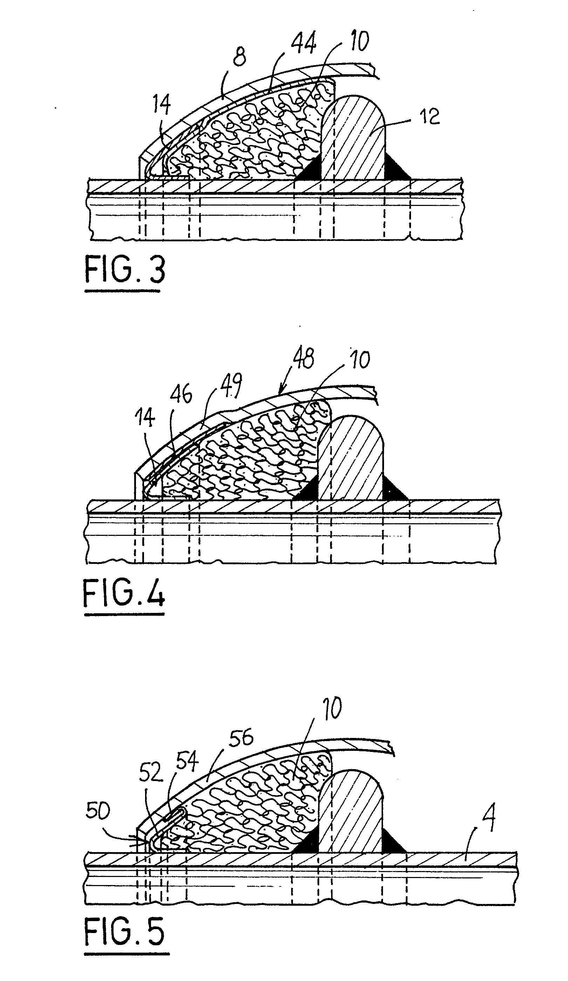

Selon une autre variante de réalisation une fine feuille métallique 44 est disposée sur la surface externe incurvée du coussin 10, comme représenté sur la Fig.3. Cette feuille métallique 44 recouvre au moins la partie du coussin 10 destinée à être en contact avec l'aile 18 de la bague d'étanchéité mais peut, comme représenté, recouvrir la totalité de la surface externe de ce coussin. Tout risque de fuite des fils métalliques de coussin entre la bague métallique 14, 15 et le boîtier 8 est ainsi évité.

Selon une autre variante (Fig.4), le boîtier 48 est revêtu intérieurement, au moins dans sa partie sphérique, d'une tôle 46 qui constitue la zone de frottement sur l'aile bombée 18 de la bague d'étanchéité 14 et limite ainsi la transmission des bruits à la tuyauterie d'échappement. De préférence, comme représenté, la partie extrême 49 du boîtier 48 est légèrement déformée vers l'extérieur pour délimiter un évidement de réception de la tôle 46 et permettre à la face interne de cete dernière de se trouver exactement dans le prolongement de la face interne du reste du boîtier.

Selon une autre variante de réalisation, représentée sur la Fig.5, le raccord comporte au moins une bague d'étanchéité 50 dont l'aile bombée extérieure 52 est recourbée en U vers l'extérieur à son extrémité libre. La bague 50 comporte ainsi un rebord annulaire 54 d'appui contre l'extrémité sphérique d'un boîtier 8, 28 ou 48. Le rebord 54 est en contact avec cette partie sphérique 56 sur une surface extrêmement étroite. En fait le contact est presque linéaire. Cette disposition est particulièrement intéressante dans les cas où des impuretés diverses risquent de se déposer sur la surface de frottement et de perturber le fonctionnement du raccord. Grâce à la forme particulière de la bague, les impuretés sont évacuées naturellement lors des oscillations du raccord. Dans tous les cas, le contact entre le rebord 54 et le boîtier est suffisamment étroit pour assurer une étanchéité de l'espace entre le tube interne et le tube externe.

Quel que soit son mode de réalisation le raccord obtenu est peu encombrant et assure de manière efficace à la fois les fonctions d'étanchéité, de filtration des vibrations et de support de la ligne d'échappement. Le boîtier peut être formé de plusieurs pièces, ce qui facilite l'assemblage et la mise en place autour des coussins. Il peut bien entendu également être d'une seule pièce. La forme sphérique de son extrémité libre est alors obtenue par sertissage, après mise en place des coussins et de la bague d'étanchéité autour du tube interne.

## Revendications

1. Raccord tubulaire articulé notamment pour tuyauterie d'échappement de véhicule automobile comportant, entre un tube interne (4, 34) ayant une saillie radiale et un tube externe (6), d'une part des moyens d'étanchéité et d'autre part des moyens de support et d'amortissement en contact avec la saillie, caractérisé en ce que le tube externe (6) comporte une partie élargie formant boîtier (8, 28) dont les portions d'extrémités sont sensiblement sphériques, qui repose sur deux coussins annulaires de support et d'amortissement (10) et qui est fermé, au moins à l'une de ses extrémités, par une bague d'étanchéité (14, 15) de section en forme de V couché, emboîtée sur le coussin correspondant et en appui sur chacun des tubes.

2. Raccord suivant la revendication 1, caractérisé en ce que chaque bague d'étanchéité (14, 15, 50) comporte une aile cylindrique (16) d'appui sur le tube interne et une aile bombée (18 - 52, 54) de contact avec le tube externe.

3. Raccord suivant l'une des revendications précédentes, caractérisé en ce qu'il comporte une bague d'étanchéité (14, 15, 50) à chacune des extrémités du boîtier.

4. Raccord suivant l'une des revendications précédentes, caractérisé en ce que le boîtier (8) est sphérique.

5. Raccord suivant l'une des revendications 1 à 3, caractérisé en ce que le boîtier (28) comporte une partie centrale cylindrique (30) entre deux anneaux sphériques (32 et 34).

6. Raccord suivant l'une des revendications précédentes, caractérisé en ce que chaque coussin (10) comporte une face cylindrique d'appui sur le tube interne (4, 34) qui est recouverte d'une couche d'un matériau compact tel que du graphite ou du mica.

7. Raccord suivant l'une des revendications précédentes, caractérisé en ce que la surface extérieure bombée de chaque coussin (10) est recouverte d'une fine feuille métallique (44) au moins dans la zone de contact avec la bague d'étanchéité (14, 15, 50).

8. Raccord suivant l'une des revendications précédentes, caractérisé en ce que le boîtier (48) comporte une tôle intérieure (46) de contact avec la bague d'étanchéité (14, 15, 50).

9. Raccord suivant l'une des revendications précédentes, caractérisé en ce que l'aile bombée (18) de chaque bague d'étanchéité (14, 15) a sur au moins une partie de sa largeur la forme d'un anneau sphérique.

10. Raccord suivant l'une des revendications précédentes, caractérisé en ce que l'aile bombée (52) de la bague (50) est recourbée vers l'extérieur à son extrémité et comporte ainsi une surface sensiblement linéaire de contact avec le boîtier.

EP 0 376 772 A1

FIG.2

FIG.1

FIG.3

FIG.4

FIG.5

FIG. 6

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | EP-A-115016 (BURGMANN)<br>* figures 1, 4 *<br>--- | 1, 2, 9 | F16L27/06 |
| A | DE-U-8608633 (WITZENMANN)<br>* figure 1 *<br>--- | 1, 3 | |
| A | US-A-2836436 (BIANCHI)<br>* figure 1 *<br>--- | 1, 4 | |
| A | DE-A-3618485 (WITZENMANN)<br>* figures 1, 8 *<br>--- | 5 | |
| A | US-A-4097071 (CRAWFORD ET AL)<br>* colonne 3, lignes 46 – 49 *<br>--- | 6 | |
| A | FR-A-2490778 (GOETZE)<br>* page 6, lignes 15 – 20; figure 3 *<br>----- | 6 | |

| DOMAINES TECHNIQUES RECHERCHES (Int. Cl.5 ) |
|---|
| F16L<br>F01N |

Le présent rapport a été établi pour toutes les revendications

| Lieu de la recherche | Date d'achèvement de la recherche | Examinateur |
|---|---|---|
| BERLIN | 08 FEVRIER 1990 | SCHLABBACH M. |

EPO FORM 1503 03.82 (P0402)